# EUROPEAN PATENT SPECIFICATION

(11) **EP 3 820 049 B1**
(45) Date of publication and mention of the grant of the patent: **24.05.2023**
(21) Application number: 19207922.6
(22) Date of filing: 08.11.2019
(51) Int. Cl.: H04B 1/10

(54) **METHOD FOR REDUCING INTERFERENCES IN A SATELLITE COMMUNICATION SYSTEM**
VERFAHREN ZUR VERRINGERUNG VON INTERFERENZEN IN EINEM SATELLITENKOMMUNIKATIONSSYSTEM
PROCÉDÉ DE RÉDUCTION DES INTERFÉRENCES DANS UN SYSTÈME DE COMMUNICATION SATELLITE

(43) Date of publication of application: 12.05.2021
(73) Proprietor: Rohde & Schwarz GmbH & Co. KG, 81671 München (DE)
(72) Inventor: Krondorf, Marco, 81671 München (DE)
(74) Representative: Prinz & Partner mbB

(56) References cited:
- EP-A1- 2 394 368
- EP-B1- 2 394 368
- CN-A- 105 929 415

## Description

The invention relates to a method for reducing interferences in a satellite communication system. The method further relates to an interference reduction system, to a satellite communication system and to a computer program.

Satellite communication systems usually comprise space-based components, i.e. satellites in orbit around earth, as well as terrestrial components such as ground stations. Generally speaking, the space-based components and the terrestrial components wirelessly communicate with each other using suitable communication protocols.

There may be interferences in the frequency ranges employed by the satellite communication system that partially or completely obstruct the wireless communication between the space-based component and the terrestrial component.

Particularly, there may be terrestrial communication systems nearby the terrestrial component that operate in frequency bands that are similar to the ones employed by the satellite communication system. This may result in unwanted disturbances or rather interferences of the satellite communication.

EP 2 394 368 A1 discloses a communication device for communicating with a satellite in the presence of an interfering narrow band communication device. The communication device comprises a signal analysis module and a filter. The signal analysis module is configured to identify interfering signal, and the filter is configured to filter out the interfering components via a notch filter.

CN 105 929 415 A discloses a satellite navigation system that is configured to filter out interferences via an adaptive notch filter technique.

Accordingly, there is a need for method for reducing interferences in a satellite communication system as well as for an interference reduction system that can reliably remove interferences from satellite communication signals.

According to the invention, the problem is solved by a method for reducing interferences in a satellite communication system. The method comprises the following steps: A satellite communication signal is received that has a frequency in a predetermined frequency band. The satellite communication signal is down-converted from the predetermined frequency band into a baseband, thereby generating a down-converted signal. At least one interference parameter is determined based on the down-converted signal. Filter parameters for an interference filter are determined based on the at least one interference parameter. The down-converted signal is filtered via the interference filter in order to remove interferences from the down-converted signal, thereby generating a filtered signal. A reconstructed down-converted signal is determined based on the filtered signal and based on the filter parameters.

In general, the satellite communication signal comprises a wanted signal and an interference signal (portion) being responsible for the interferences.

One advantage of the method according to the invention is that the satellite communication signal does not need to be demodulated in order to remove the interferences from the satellite communication signal such that the wanted signal is recovered.

Instead of demodulating the satellite communication signal immediately, the satellite communication signal is down-converted and the relevant signal parameters of the interferences, i.e. the at least one interference parameter, is determined or rather estimated.

Therein and in the following, it is understood that the term "determine at least one interference parameter" also comprises the meaning that the at least one interference parameter is estimated instead of exactly calculated.

The parameters of the interference filter, for example a central filter frequency, a filter bandwidth and/or attenuation levels for respective frequency portions of the filter, are then determined based on the at least one interference parameter such that interference signal can be removed from the down-converted signal.

In other words, the interference filter is established as a frequency selective interference filter, wherein the relevant filter parameters of the interference filter are adjusted such that the interference signal is removed from the down-converted signal.

According to the present invention, the reconstructed down-converted signal is determined based on the filtered signal and based on the filter parameters. This is possible, because the relevant filter parameters of the filter module are known, particularly the central filter frequency, the filter bandwidth and/or the attenuation levels associated with the individual frequency portions. The reconstructed down-converted signal corresponds to the wanted signal that is down-converted into the baseband.

According to one aspect of the invention, the at least one interference parameter comprises an interference signal amplitude, an interference signal power, an interference signal bandwidth, and/or an interference signal central frequency. These properties of the interference signal are directly linked with respective countermeasures that are needed to remove the interference signal.

Particularly, a central filter frequency, a filter bandwidth and/or an attenuation level for the respective frequencies is determined based on the central frequency of the interference signal, based on the bandwidth of the interference signal, and based on the power level of the interference signal, respectively.

In an embodiment of the present invention, the reconstructed down-converted signal is up-converted from the baseband to the predetermined frequency band. Thus, the wanted signal is recovered, as the interference signal has already been removed before the up-conversion.

In a further embodiment of the present invention, the down-converted signal is digitized. Accordingly, the subsequent steps can all be performed based on a digitized down-converted signal. Particularly, digital filters can be used, which can for example be implemented completely in software.

Particularly, the reconstructed down-converted signal is analogized. This way, the original analog version of the wanted signal is recovered.

The down-converted signal may be buffered for further processing. More precisely, the step of filtering the down-converted signal is delayed until the interference parameters and the filter parameters, such that the respective portions of the down-converted signal are filtered with the appropriate filter parameters.

According to another aspect of the present invention, all steps of the method are performed on the satellite communication signal that is modulated. In other words, the satellite communication signal is not demodulated for any of the steps described above. Demodulating the satellite communication signal beforehand would require knowledge of the modulation type of the interference signal comprised in the satellite communication signal.

Therefore, the method can be performed even though the modulation type is unknown.

According to the invention, the problem is further solved by an interference reduction system for reducing interferences in a satellite communication system, comprising a receiver module and a signal analysis module. The signal analysis module comprises an interference filter module and a reconstruction module. The receiver module is configured to receive a satellite communication signal. The receiver module is configured to down-convert the satellite communication signal, thereby generating a down-converted signal. The signal analysis module is configured to determine at least one filter parameter for the filter module based on the down-converted signal. The interference filter module is configured to filter the down-converted signal in order to remove interferences from the down-converted signal, thereby generating a filtered signal. The reconstruction module is configured to reconstruct a wanted signal from the filtered signal based on the determined filter parameters and based on the filtered signal, thereby generating a reconstructed down-converted signal

Regarding the further advantages and properties of the interference reduction system, reference is made to the explanations given above with respect to the method for reducing interferences in a satellite communication system, which also hold for the interference reduction system and vice versa.

Particularly, the interference reduction system is configured to perform the method described above.

According to the invention, the problem further is solved by a satellite communication system, comprising a transmitter device, a receiver device, and an interference reduction system described above. The transmitter device is configured to transmit a satellite communication signal, wherein the receiver device is configured to demodulate the satellite communication signal, and wherein the interference reduction system is connected to the receiver device upstream of the receiver device. Thus, as already explained above, interferences are removed before demodulating the satellite communication signal.

Regarding the further advantages and properties of the satellite communication system, reference is made to the explanations given above with respect to the method for reducing interferences in a satellite communication system, which also hold for the satellite communication system and vice versa.

According to the invention, the problem further is solved by a computer program, comprising program code means that are adapted to cause an interference reduction system, particularly the interference reduction system described above, to perform the method described above when the computer program is run on a central processing unit of the interference reduction system.

Regarding the further advantages and properties of the computer program, reference is made to the explanations given above with respect to the method for reducing interferences in a satellite communication system, which also hold for the computer program and vice versa.

The foregoing aspects and many of the attendant advantages of the claimed subject matter will become more readily appreciated as the same become better understood by reference to the following detailed description, when taken in conjunction with the accompanying drawings, wherein:
- Figure 1 schematically shows a satellite communication system according to the invention;
- Figure 2 shows a block diagram of an interference reduction system according to the invention; and
- Figure 3 shows a flow chart of a method for reducing interferences in a satellite communication system according to the invention.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

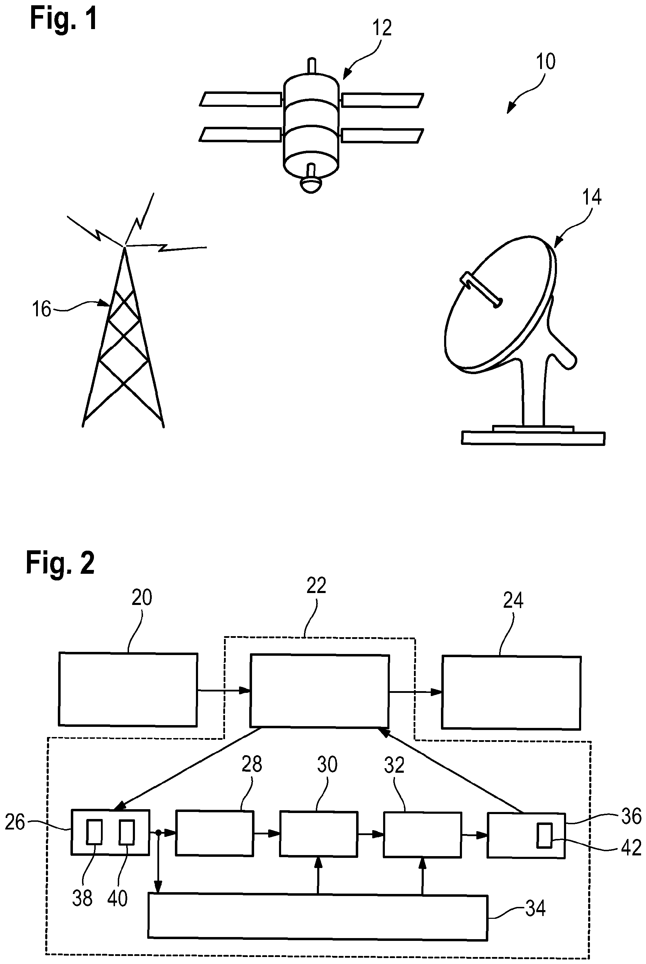

Figure 1 shows a satellite communication system 10 comprising at least one space-based component 12 and at least one terrestrial component 14.

The space-based component 12 is established as a satellite being in an orbit around earth. The space-based component may be geosynchronous, particularly geostationary, i.e. it does not move relative to the surface of the earth.

More specifically, the space-based component 12 is established as a communication satellite. Thus, the space-based component 12 is configured to receive and transmit electromagnetic waves in at least one predetermined frequency band.

For example, the space-based component 12 is configured to receive and transmit electromagnetic waves in the L-band (1-2 GHz) and/or in the S-band (2-4 GHz).

However, the space-based component 12 may alternatively or additionally be configured to receive and transmit electromagnetic waves in any other satellite communication frequency band, e.g. the C-, X- , Ku-, K- and/or Ka-band.

The terrestrial component 14 is established as a ground station. The terrestrial component 14 is configured to receive and transmit electromagnetic waves in the at least one predetermined frequency band.

However, the terrestrial component 14 may also be established as a mobile satellite communication device, for example as a satellite telephone.

Particularly, the terrestrial component 14 is configured to receive and transmit electromagnetic waves in the same frequency band as the space-based component 12.

Generally speaking, the space-based component 12 and the terrestrial component 14 are configured to wirelessly communicate with each other. Particularly, several terrestrial components 14 may communicate with one another via the at least one space-based component 12.

There are two main communication directions, namely from the terrestrial component 14 to the space-based component, which is called "uplink", and from the space-based component 12 to the terrestrial component 14, which is called "downlink". The frequencies employed for the downlink and for the uplink may be different from each other.

Thus, the space-based component 12 and the terrestrial component 14 both comprise a receiver device for receiving an electromagnetic signal as well as a transmitter device for transmitting an electromagnetic signal.

There may be interferences in the frequency ranges employed by the satellite communication system 10 that partially or completely obstruct the wireless communication between the space-based component 12 and the terrestrial component 14.

Particularly, there may be terrestrial communication systems nearby the terrestrial component 14 that operate in frequency bands that are similar to the ones employed by the satellite communication system 10.

For example, there may be a mobile communication cell tower 16 being part of a terrestrial communication system, which operates in frequency bands associated with modern mobile communication standards such as 4G or 5G or 5G NR.

Signals transmitted by the mobile communication cell tower 16 also reach the terrestrial component 14 and may interfere with signals transmitted from the space-based component 12 to the terrestrial component 14 or vice versa. These interferences can significantly impair the communication between the space-based component 12 and the terrestrial component 14.

In order to resolve this issue, the terrestrial component 14 and/or the space-based component 12 are provided with an interference reduction system 18 that is schematically shown in Figure 2.

The interference reduction system 18 comprises a receiver module 20, a signal analysis module 22 and a demodulator module 24.

Therein and in the following, the term "module" is understood to denote that the respective component is established in hardware and/or in software.

The analysis module 22 comprises a down-converter module 26, a buffer module 28, a filter module 30, a reconstruction module 32, a parameter determination module 34 and an up-converter module 36.

As already mentioned above, the individual modules of the interference reduction system 18 may be established as hardware and/or a software.

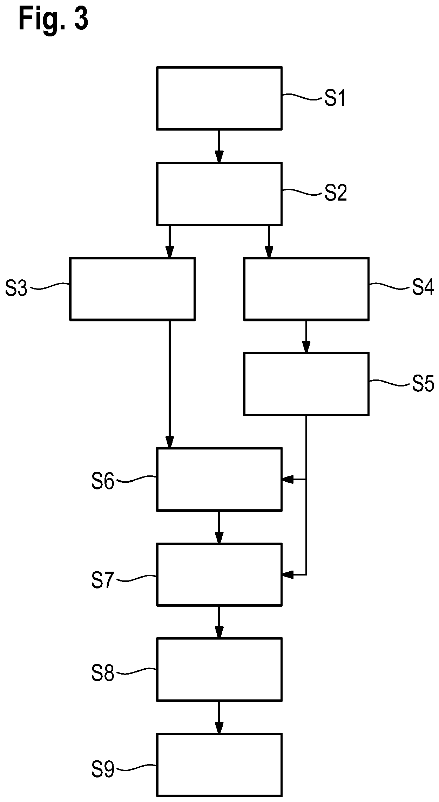

The interference reduction system 18 is configured to perform a method for reducing interferences in the satellite communication system 10, which is explained in the following with reference to Figure 3.

Particularly, the interference reduction system 18 may be at least partly established as a computer program comprising program code means that are adapted to cause the interference reduction system 18 to perform the method for reducing interferences in the satellite communication system 10 explained in the following, when the computer program is run on a central processing unit of the interference reduction system 18.

A satellite communication signal having a frequency in the predetermined frequency band, particularly one of the frequency bands mentioned above, is received by the receiver module 20 of the terrestrial component 14 or the space-based component 12 (step S1).

Generally speaking, the satellite communication signal received by the receiver module 20 has at least two components.

First, the satellite communication signal comprises a wanted signal, i.e. a symbol sequence transmitted between the space-based component 12 and the terrestrial component 14. The wanted signal is modulated according to a suitable communication protocol employed by the satellite communication system 10.

Second, the received satellite communication signal comprises an interference signal.

In the example of Figure 2, the interference signal is a mobile communication signal transmitted by the mobile communication cell tower 16. The interference signal is modulated according to a suitable communication protocol employed by the mobile communication cell tower 16, which usually differs from the communication protocol employed by the satellite communication system 10.

Thus, the wanted signal and the interference signal are usually modulated in different ways. Particularly, the type of modulation for the interference signal is unknown.

The received satellite communication signal is then forwarded to the signal analysis module 22, more precisely to the down-converter module 26.

The received satellite communication signal is down-converted from the predetermined frequency band to a baseband having a lower frequency than the predetermined frequency band by the down-converter module 26, thereby generating a down-converted signal (step S2).

Particularly, the down-converter module 26 mixes the received satellite communication signal with a mixer signal having a predetermined mixer frequency.

Mixing the received satellite communication signal with the mixer signal results in two signals, wherein the one with the lower frequency, namely the frequency being equal to the difference of the satellite communication signal frequency and the mixer frequency, is the down-converted satellite communication signal.

The other signal having a frequency being equal to the sum of the satellite communication signal frequency and the mixer frequency may be filtered out with a filter 38, particularly a lowpass filter or a bandpass filter.

In other words, unwanted high frequency components of the down-converted signal are removed from the down-converted signal by filtering the down-converted signal with the filter 38. Thus, the filter 38 may also be called an antialiasing filter.

The down-converter module 26 may further comprise an analog-to-digital converter 40 that digitizes the filtered down-converted signal, thereby generating a digitized down-converted signal.

The digitized down-converted signal is then forwarded to both the buffer module 28 and to the parameter determination module 34.

The buffer module 28 buffers the digitized down-converted signal for further processing (step S3).

Particularly, the buffer module 28 forwards the digitized down-converted signal to the filter module 30 with a predetermined time delay.

The parameter determination module 34 determines at least one interference parameter based on the digitized down-converted signal (step S4).

Therein and in the following, it is understood that the term "determine at least one interference parameter" also comprises the meaning that the at least one interference parameter is estimated instead of exactly calculated.

Generally speaking, the at least one interference parameter comprises information on relevant properties of the interference signal.

More precisely, the at least one interference parameter may comprise information on an amplitude of the interference signal, on a power level of the interference signal, on a central frequency of the interference signal, on a bandwidth of the interference signal and/or on any other property of the interference signal being relevant for the satellite communication system 10.

The parameter determination module 34 then determines filter parameters for the filter module 30 (step S5) based on the digitized down-converted signal and based on the at least one interference parameter.

Particularly, a central filter frequency, a filter bandwidth and/or an attenuation level for the respective frequencies is determined based on the central frequency of the interference signal, based on the bandwidth of the interference signal, and based on the power level of the interference signal, respectively.

The determined filter parameters are then forwarded to the filter module 30 and the corresponding filter module parameters are adjusted based on the determined filter parameters.

In other words, the filter module 30 is established as a frequency adaptive interference filter. Thus, the attenuation level of the filter module 30 is individually adjustable for several frequency portions of the filter frequency range.

Based on the determined interference parameters, the attenuation level of the filter module 30 associated with the individual frequency portions is adjusted such that a portion of the satellite communication signal comprising the interference signal is filtered out by filter module 30, thereby generating a filtered signal (step S6).

Accordingly, the buffer module 28 buffers the digitized down-converted signal until the filter parameters are determined and the filter parameters of the filter module 30 are adjusted.

The filtered signal as well as the determined filter parameters are forwarded to the reconstruction module 32.

Based on the determined filter parameters and based on the filtered signal, the reconstruction module 32 reconstructs the wanted signal from the filtered signal, thereby generating a reconstructed down-converted signal (step S7).

This is possible since the relevant filter parameters of the filter module 30 are known, particularly the central filter frequency, the filter bandwidth and/or the attenuation levels associated with the individual frequency portions.

The reconstructed down-converted signal corresponds to the wanted signal that is down-converted into the baseband.

The reconstructed down-converted signal is forwarded to the up-converter module 36 and is up-converted from the baseband to the predetermined frequency band, thereby recovering a digitized wanted signal (step S8).

The up-converter module 36 is essentially the inverse element to the down-converter module 26, i.e. processing a signal with the down-converter module 26 and then with the up-converter module 36 restores the original signal.

Accordingly, the up-converter module 36 may comprise a digital-to-analog converter 42 that analogizes the digitized wanted signal, thereby recovering the wanted signal.

Note that steps S1 to S8 are all performed before demodulating the satellite communication signal.

It is only after step S8 that the recovered wanted signal is forwarded to the demodulator module 24 and demodulated (step S9). Hence, the type of modulation of the wanted signal is used by means of the demodulator module 24, which is known.

Thus, according to the method described above, the interference signal is removed from the satellite communication signal by digitally filtering the satellite communication signal before demodulating it.

This way, the modulation type of the interference signal does not need to be known in order to remove the interference signal.

## Claims

1. A method for reducing interferences in a satellite communication system (10), comprising the following steps:
- receiving a satellite communication signal, the satellite communication signal having a frequency in a predetermined frequency band;
- down-converting the satellite communication signal from the predetermined frequency band into a baseband, thereby generating a down-converted signal;
- determining at least one interference parameter based on the down-converted signal;
- determining filter parameters for an interference filter based on the at least one interference parameter;
- filtering the down-converted signal via the interference filter in order to remove interferences from the down-converted signal, thereby generating a filtered signal; and
- determining a reconstructed down-converted signal based on the filtered signal and based on the filter parameters.

2. The method according to claim 1, wherein the at least one interference parameter comprises an interference signal amplitude, an interference signal power, an interference signal bandwidth, and/or an interference signal central frequency.

3. The method according to any of the preceding claims, wherein the reconstructed down-converted signal is up-converted from the baseband to the predetermined frequency band.

4. The method according to any one of the preceding claims, wherein the down-converted signal is digitized.

5. The method according to claim 4, wherein the reconstructed down-converted signal is analogized.

6. The method according to any one of the preceding claims, wherein the down-converted signal is buffered for further processing.

7. The method according to any one of the preceding claims, wherein all steps of the method are performed on the satellite communication signal that is modulated.

8. An interference reduction system for reducing interferences in a satellite communication system (10), comprising a receiver module (20) and a signal analysis module (22), wherein the signal analysis module (22) comprises an interference filter module (30) and a reconstruction module (32),
wherein the receiver module (20) is configured to receive a satellite communication signal,
wherein the receiver module (20) is configured to down-convert the satellite communication signal, thereby generating a down-converted signal,
wherein the signal analysis module (22) is configured to determine at least one filter parameter for the filter module (30) based on the down-converted signal,
wherein the interference filter module (30) is configured to filter the down-converted signal in order to remove interferences from the down-converted signal, thereby generating a filtered signal, and
wherein the reconstruction module (32) is configured to reconstruct a wanted signal from the filtered signal based on the determined filter parameters and based on the filtered signal, thereby generating a reconstructed down-converted signal.

9. The interference reduction system of claim 8, wherein the interference reduction system (18) is configured to perform the method according to any one of the claims 1 to 8.

10. A satellite communication system, comprising a transmitter device, a receiver device, and an interference reduction system (18) according to claim 8 or 9, wherein the transmitter device is configured to transmit a satellite communication signal, wherein the receiver device is configured to demodulate the satellite communication signal, and wherein the interference reduction system (18) is connected to the receiver device upstream of the receiver device.

11. A computer program, comprising program code means that are adapted to cause an interference reduction system (18) to perform the method according to any one of the claims 1 to 7 when the computer program is run on a central processing unit of the interference reduction system (18).

## Patentansprüche

1. Verfahren zum Reduzieren von Interferenzen in einem Satellitenkommunikationssystem (10), das die folgenden Schritte umfasst:
- Empfangen eines Satellitenkommunikationssignals, wobei das Satellitenkommunikationssignal eine Frequenz in einem vorbestimmten Frequenzband aufweist;
- Abwärtswandeln des Satellitenkommunikationssignals vom vorbestimmten Frequenzband in ein Basisband, wodurch ein abwärtsgewandeltes Signal erzeugt wird;
- Bestimmen von mindestens einem Interferenzparameter auf Basis des abwärtsgewandelten Signals;
- Bestimmen von Filterparametern für ein Interferenzfilter auf Basis des mindestens einen Interferenzparameters;
- Filtern des abwärtsgewandelten Signals via das Interferenzfilter, um Interferenzen aus dem abwärtsgewandelten Signal zu entfernen, wodurch ein gefiltertes Signal erzeugt wird; und
- Bestimmen eines rekonstruierten abwärtsgewandelten Signals auf Basis des gefilterten Signals und auf Basis der Filterparameter.

2. Verfahren nach Anspruch 1, wobei der mindestens eine Interferenzparameter eine Interferenzsignalamplitude, eine Interferenzsignalleistung, eine Interferenzsignalbandbreite und/oder eine Interferenzsignalmittenfrequenz umfasst.

3. Verfahren nach einem der vorhergehenden Ansprüche, wobei das rekonstruierte abwärtsgewandelte Signal vom Basisband zum vorbestimmten Frequenzband aufwärtsgewandelt wird.

4. Verfahren nach einem der vorhergehenden Ansprüche, wobei das abwärtsgewandelte Signal digitalisiert ist.

5. Verfahren nach Anspruch 4, wobei das rekonstruierte abwärtsgewandelte Signals analogisiert ist.

6. Verfahren nach einem der vorhergehenden Ansprüche, wobei das abwärtsgewandelte Signal zur weiteren Verarbeitung gepuffert wird.

7. Verfahren nach einem der vorhergehenden Ansprüche, wobei alle Schritte des Verfahrens am Satellitenkommunikationssignal, das moduliert ist, durchgeführt werden.

8. Interferenzreduktionssystem zum Reduzieren von Interferenzen in einem Satellitenkommunikationssystem (10), das ein Empfängermodul (20) und ein Signalanalysemodul (22) umfasst, wobei das Signalanalysemodul (22) ein Interferenzfiltermodul (30) und ein Rekonstruktionsmodul (32) umfasst,
wobei das Empfängermodul (20) dazu ausgelegt ist, ein Satellitenkommunikationssignal zu empfangen,
wobei das Empfängermodul (20) dazu ausgelegt ist, das Satellitenkommunikationssignal abwärtszuwandeln, um dadurch ein abwärtsgewandeltes Signal zu erzeugen,
wobei das Signalanalysemodul (22) dazu ausgelegt ist, auf Basis des abwärtsgewandelten Signals mindestens einen Filterparameter für das Filtermodul (30) zu bestimmen,
wobei das Interferenzfiltermodul (30) dazu ausgelegt ist, das abwärtsgewandelte Signal zu filtern, um Interferenzen aus dem abwärtsgewandelten Signal zu entfernen, um dadurch ein gefiltertes Signal zu erzeugen, und
wobei das Rekonstruktionsmodul (32) dazu ausgelegt ist, auf Basis der bestimmten Filterparameter und auf Basis des gefilterten Signals ein gewünschtes Signal aus dem gefilterten Signal zu rekonstruieren, um dadurch ein rekonstruiertes abwärtsgewandeltes Signal zu erzeugen.

9. Interferenzreduktionssystem nach Anspruch 8, wobei das Interferenzreduktionssystem (18) dazu ausgelegt ist, das Verfahren nach einem der Ansprüche 1 bis 8 durchzuführen.

10. Satellitenkommunikationssystem, das eine Sendervorrichtung, eine Empfängervorrichtung und ein Interferenzreduktionssystem (18) nach Anspruch 8 oder 9 umfasst, wobei die Sendervorrichtung dazu ausgelegt ist, ein Satellitenkommunikationssignal zu übertragen, wobei die Empfängervorrichtung dazu ausgelegt ist, das Satellitenkommunikationssignal zu demodulieren, und wobei das Interferenzreduktionssystem (18) stromaufwärts von der Empfängervorrichtung mit der Empfängervorrichtung verbunden ist.

11. Computerprogramm, das Programmcodemittel umfasst, die angepasst sind, ein Interferenzreduktionssystem (18) zu veranlassen, das Verfahren nach einem der Ansprüche 1 bis 7 durchzuführen, wenn das Computerprogramm auf einer zentralen Verarbeitungseinheit des Interferenzreduktionssystems (18) ausgeführt wird.

## Revendications

1. Procédé pour réduire les interférences dans un système de communication par satellite (10) comprenant les étapes suivantes :
- recevoir un signal de communication par satellite, le signal de communication par satellite ayant une fréquence dans une bande de fréquence prédéterminée ;
- convertir en sens descendant le signal de communication par satellite à partir de la bande de fréquence prédéterminée en une bande de base, générant ainsi un signal converti en sens descendant ;
- déterminer au moins un paramètre d'interférence sur la base du signal converti en sens descendant ;
- déterminer des paramètres de filtre pour un filtre d'interférence sur la base de l'au moins un paramètre d'interférence ;
- filtrer le signal converti en sens descendant via le filtre d'interférence afin d'éliminer les interférences du signal converti en sens descendant, générant ainsi un signal filtré ; et
- déterminer un signal reconstruit converti en sens descendant sur la base du signal filtré et sur la base des paramètres de filtre.

2. Procédé selon la revendication 1, dans lequel l'au moins un paramètre d'interférence comprend une amplitude de signal d'interférence, une puissance de signal d'interférence, une largeur de bande de signal d'interférence, et/ou une fréquence centrale de signal d'interférence.

3. Procédé selon l'une quelconque des revendications précédentes, dans lequel le signal reconstruit converti en sens descendant est converti en sens montant de la bande de base à la bande de fréquence prédéterminée.

4. Procédé selon l'une quelconque des revendications précédentes, dans lequel le signal converti en sens descendant est numérisé.

5. Procédé selon la revendication 4, dans lequel le signal reconstruit converti en sens descendant est analogisé.

6. Procédé selon l'une quelconque des revendications précédentes, dans lequel le signal converti en sens descendant est mis en mémoire tampon pour traitement ultérieur.

7. Procédé selon l'une quelconque des revendications précédentes, dans lequel toutes les étapes du procédé sont réalisées sur le signal de communication par satellite qui est modulé.

8. Système de réduction des interférences pour réduire les interférences dans un système de communication par satellite (10), comprenant un module de réception (20) et un module d'analyse de signal (22), dans lequel le module d'analyse de signal (22) comprend un module de filtre d'interférence (30) et un module de reconstruction (32),
dans lequel le module de réception (20) est configuré pour recevoir un signal de communication par satellite,
dans lequel le module de réception (20) est configuré pour convertir en sens descendant le signal de communication par satellite, générant ainsi un signal converti en sens descendant,
dans lequel le module d'analyse de signal (22) est configuré pour déterminer au moins un paramètre de filtre pour le module de filtre (30) sur la base du signal converti en sens descendant,
dans lequel le module de filtre d'interférence (30) est configuré pour filtrer le signal converti en sens descendant afin d'éliminer les interférences du signal converti en sens descendant, générant ainsi un signal filtré, et
dans lequel le module de reconstruction (32) est configuré pour reconstruire un signal utile à partir du signal filtré sur la base des paramètres de filtre déterminés et sur la base du signal filtré, générant ainsi un signal reconstruit converti en sens descendant.

9. Système de réduction des interférences selon la revendication 8, dans lequel le système de réduction des interférences (18) est configuré pour réaliser le procédé selon l'une quelconque des revendications 1 à 8.

10. Système de communication par satellite, comprenant un dispositif émetteur, un dispositif récepteur et un système de réduction des interférences (18) selon la revendication 8 ou 9, dans lequel le dispositif émetteur est configuré pour émettre un signal de communication par satellite, dans lequel le dispositif récepteur est configuré pour démoduler le signal de communication par satellite, et dans lequel le système de réduction des interférences (18) est connecté au dispositif récepteur en amont du dispositif récepteur.

11. Programme informatique, comprenant des moyens de code de programme qui sont adaptés pour amener un système de réduction des interférences (18) à réaliser le procédé selon l'une quelconque des revendications 1 à 7 lorsque le programme informatique est exécuté sur une unité centrale de traitement du système de réduction des interférences (18).
